# EUROPEAN PATENT APPLICATION

(11) **EP 3 502 985 A1**
(43) Date of publication of application: **26.06.2019**
(21) Application number: 18199015.1
(22) Date of filing: 06.10.2018
(51) Int. Cl.: G06Q 10/08, G06Q 50/28

(54) **DELIVERY METHOD**

(30) Priority: 22.12.2017 KR 20170178115
(71) Applicant: Ko, Chang Sin, Seoul 01189 (KR)
(72) Inventor: Ko, Chang Sin, Seoul 01189 (KR)
(74) Representative: Cabinet Chaillot

(57) **Abstract**

Disclosed herein is delivering a product that comprises accessing a delivery system through a computer or a mobile phone Internet and then requesting delivery, providing a delivery number from the delivery system to a delivery requester, notifying special delivery persons through their dedicated delivery applications that there is a product to be delivered, checking delivery intentions of the special delivery persons in order of arrival through their applications, designating a delivery person in charge from the delivery system, collecting the product to be delivered at a delivery request address by the designated delivery person in charge, and getting a signature of a recipient through the application of the mobile phone of the special delivery.

## Description

### BACKGROUND OF THE INVENTION

### Field of the Invention

The present invention relates to a delivery method using a delivery system, and more particularly, to a delivery method capable of providing a special delivery person with a maximum profit from delivery costs and offering a same-day delivery service.

### Description of the Related Art

With the conversion of a post office-driven parcel delivery system into a private enterprise-driven delivery system, there has been a great change in logistics systems for small packages. Through the introduction of the private enterprise-driven delivery system, the distribution and delivery of small or large packages are vitalized between individuals, between enterprises and individuals, and between enterprises, which forms a driver of the national economy now.

In addition, there is often a need to deliver very small packages or documents on the same day, which thus makes a quick delivery service using motorcycles that is currently active.

However, it typically takes two days to deliver packages even within a close distance, for example from Seoul to Suwon, in an existing delivery system because packages are collected in one place and then divided and sorted for each region to send the sorted packages to a relevant region, and the packages are distributed to subregions in that region to be delivered by delivery persons. Hence, it is impossible to utilize the existing delivery system when there is a need for same-day delivery.

Meanwhile, the quick delivery service may be used when there is a need for same-day delivery, but it costs too much and particularly incurs a considerable expense for a remote region. In addition, the quick delivery service is disadvantageous in that very long-distance delivery, for example, the long-distance delivery from Seoul to Cheonan is substantially impossible.

Meanwhile, an existing used product transaction is at a risk of fake trade because it is separately performed through a marketing site and a delivery system and selling products are not surely verified. In addition, the existing used product transaction is disadvantageous in that payment is late at the time of payment through secure payment.

Accordingly, a delivery system, if introduced, will be very useful to all users since the delivery system enables products to be delivered on the same day at an appropriate cost regardless of location in the case of delivery service and enables selling products to be verified and delivered on the same day as well as fast payment in the case of product transaction between individuals.

### SUMMARY OF THE INVENTION

Accordingly, an object of the present invention is to provide a delivery method that enables products to be delivered on the same day at an appropriate cost and enables products to be sold and delivered on the same day as well as secure payment through a web page.

In accordance with an aspect of the present invention, a delivery method uses a delivery system, which includes a main server for managing the entirety of the delivery system, a delivery personnel management server for managing delivery personnel, a delivery management server for managing delivery of a product at a customer's request, and a payment management server for managing payment for delivery, settlement of delivery costs for delivery personnel, and payment and settlement according to B2B, B2P, and P2P, and includes registering a special delivery person and delivering a product.

The registering a special delivery person includes accessing the delivery system through a delivery system web page, inputting registered mobile phone information together with personal information, completing membership registration after performing personal authentication through an accredited certificate and an authentication means, obtaining a personal code, and downloading a dedicated delivery application to a registered mobile phone and then logging in with the issued personal code.

The delivering a product includes accessing the delivery system through a computer or a mobile phone Internet and then requesting delivery, providing a delivery number from the delivery system to a delivery requester, notifying special delivery persons through their dedicated delivery applications that there is a product to be delivered, checking delivery intentions of the special delivery persons in order of arrival through their applications, designating a delivery person in charge from the delivery system, collecting the product to be delivered at a delivery request address by the designated delivery person in charge, and getting a signature of a recipient through the application of the mobile phone of the special delivery person after the product is delivered to the recipient.

The delivering a product includes accessing the delivery system and then requesting delivery, providing a delivery number to a delivery requester, notifying special delivery persons through their dedicated delivery applications that a long-distance delivery product is, checking delivery intentions of special delivery persons who meet a condition in order of arrival through their applications, collecting the product at a delivery request address and delivering the product to a recipient by a relevant special delivery person who meets the condition, if there is no special delivery person in the notifying special delivery persons, notifying the special delivery persons through their applications of a request to look for registered first special delivery persons who can perform delivery from a first specific region to a second specific region, checking delivery intentions of the first special delivery persons who can perform delivery to the second specific region, notifying the special delivery persons of a request to look for second special delivery persons who can perform delivery to the first specific region, checking delivery intentions of the second special delivery persons who can perform delivery to first second specific region, and collecting a product to be delivered after a relevant second special delivery person visits a delivery request address and photographs the product to upload it, transferring the product after the first special delivery person meets with the second special delivery person in a specific region, checking acquisition/transfer completion between the first and second special delivery persons through their applications, and completing the delivery after the first special delivery person transfers the product to a recipient in the second specific region and gets a signature of recipient.

### BRIEF DESCRIPTION OF THE DRAWINGS

FIG. 1A is a diagram schematically illustrating a delivery system according to an embodiment of the present invention;
FIG. 1B is a diagram illustrating a delivery system according to another embodiment of the present invention;
FIG. 2 is a flowchart illustrating a process of registering a special delivery person according to the present invention;
FIG. 3 is a flowchart illustrating a short-distance delivery process according to the present invention;
FIG. 4 is a flowchart illustrating a long-distance delivery process according to the present invention; and

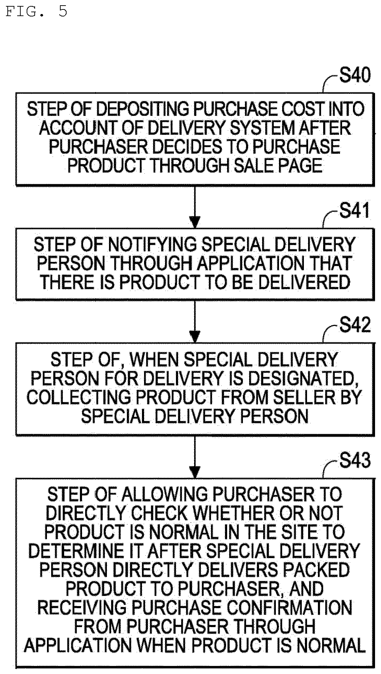

FIG. 5 is a flowchart illustrating a process of secure payment and delivery in a product transaction.

### DETAILED DESCRIPTION OF THE PREFERRED EMBODIMENTS

Hereinafter, the present invention will be described with reference to the accompanying drawings.

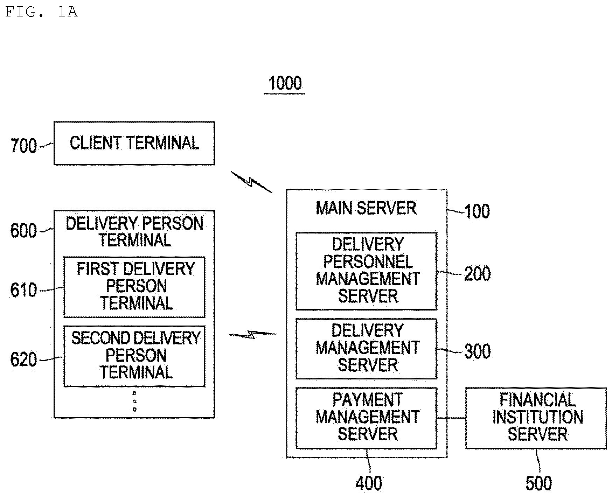

First, as illustrated in FIG. 1A, a delivery system 1000 according to an embodiment of the present invention includes a main server 100 that manages the entirety of the delivery system, a delivery personnel management server 200 that manages delivery personnel, a delivery management server 300 that manages delivery of products at a customer's request, and a payment management server 400 that manages payment for delivery, settlement of delivery costs for delivery personnel, and payment and settlement according to B2B, B2P, and P2P. The payment management server 400 is connected to a financial institution server 500 such as a bank positioned to the outside. The delivery personnel management server 200 is a server that manages personnel delivering products in the delivery system of the present invention.

In addition, the delivery system further includes a delivery person terminal 600 that accesses the main server 100 for data communication therewith to perform a delivery person registration process for delivery, transmit delivery person designation intention information at the request of specific delivery to the main server 100 and receive a delivery person designation notification from the main server 100, and a client terminal 700 that accesses the main server 100 for data communication therewith to request the delivery of intended products and receive delivery information on the delivery request from the main server 100.

The delivery personnel of the present invention use general persons instead of the special delivery persons employed in an existing courier service. This is similar to an existing food delivery company in terms of using general persons. However, the existing food delivery company uses persons having vehicles such as motorcycles for rapid delivery, but there is no constraint on the delivery persons of the present invention. That is, ordinary civilians, taxi drivers, truck drivers, etc. may be used as the delivery persons, and it doesn't matter whether or not they have vehicles.

The main server 100 is provided to manage the overall process of delivery such as delivery request from the client terminal 700 as well as membership registration and authentication in the delivery person terminal 600. The main server 100 includes the delivery personnel management server 200 that manages authentication and registration of delivery persons and delivery person designation through data transmission and reception with the delivery person terminal 600, the delivery management server 300 that manages delivery of products at a customer's request through data transmission and reception with the client terminal 700, and the payment management server 400 that manages payment for delivery, settlement of delivery costs for delivery personnel, and payment and settlement according to B2B, B2P, and P2P.

The delivery personnel management server 200 manages information on a plurality of delivery persons such that, when there is a request for delivery, the delivery personnel management server 200 receives delivery person designation intention information according to delivery information transmitted to the delivery person terminal 600 of a suitable delivery person to designate a specific delivery person for delivery through that delivery person.

This delivery personnel management server 200 is connected to the delivery person terminal 600 for data communication therewith to receive a request for delivery person registration from the delivery person terminal 600, in which case it provides an input interface to input delivery person identification information to the delivery person terminal 600, wherein the delivery person identification information is personal information and includes, for example, individual human information such as addresses, movable regions, whether or not having vehicles, mobile numbers to be registered, and deposit account information.

To this end, when there is a request for delivery person registration in the delivery person terminal 600 or a request for delivery from the client terminal 700, it is preferable that the main server 100 provides a dedicated delivery application such that the dedicated delivery application is downloaded to and executed in the delivery person terminal 600 or the client terminal 700.

Thus, the delivery person terminal 600 or the client terminal 700 is connected to the main server 100 by driving the dedicated delivery application when accessing the main server 100, to easily and rapidly perform an inquiry about various types of information, transmission and reception of request information, etc. through the interface of the application.

Meanwhile, when it is determined that the delivery person identification information has been normally input to the delivery personnel management server 200 at the request for delivery person registration from the delivery person terminal 600, the delivery personnel management server 200 transmits a specific personal code to that delivery person terminal 600.

Since the access and login to the dedicated delivery application are performed through the above personal code, a repeated separate authentication process may be omitted.

In the case where a plurality of delivery person terminals 600 has been registered in the delivery personnel management server 200, when a delivery request is received through the delivery management server 300 in the future, the delivery information, which is transmitted together at the time of the delivery request, is transmitted to the registered delivery person terminals 600 so that delivery person designation intention information is received from the delivery person terminals 600.

In this case, it is preferable that the delivery personnel management server 200 compares GPS information of the delivery person terminals 600 or base station information with delivery information of products to be delivered for rapid delivery to transmit delivery information and request delivery person designation intention information to a delivery person terminal 600 that is within a set distance from a delivery starting point or a delivery destination.

For example, the delivery information is transmitted and the delivery person designation intention information is requested to the delivery person terminal 600 that is within 1 km in the case of the delivery person walking with no vehicle or within 3 km in the case of the delivery person using any vehicle.

In this way, the delivery personnel management server 200 transmits delivery person designation notification information to a delivery person terminal 600, which transmits a designation intention thereto in order of arrival, from among the delivery person terminals 600 receiving the request for delivery person designation intention information, and delivery is performed through the delivery person terminal 600 which receives the designation notification information.

Meanwhile, when a delivery starting point and a delivery destination are farther than the set distance, the delivery personnel management server 200 divides an entire path into a plurality of paths to transmit delivery information and request delivery person designation intention information to a delivery person terminal 600 for each relevant divided path.

When it is intended to designate delivery persons for a plurality of divided paths, the delivery personnel management server 200 may sort delivery paths to designate a delivery person terminal 600 for each delivery path. In another embodiment, the delivery personnel management server 200 receives delivery designation intention information of a first delivery person terminal 610 which enables delivery through a partial path of the entire delivery path and transmits delivery information and a request for delivery intention information to a delivery person terminal 600, which is within the set distance, for a remaining delivery path except for the above path, with the consequence that a second delivery person terminal 620 or another delivery person terminal may be designated to be in charge of delivery through the remaining path.

The delivery management server 300 is provided to manage delivery of products at a customer's request through data transmission and reception with the client terminal 700. The delivery management server 300 requests input of delivery information, which includes a delivery destination, a delivery starting point, an intended delivery date and time, and a recipient, when delivery is requested from the client terminal 700, and receives the delivery information when the delivery information is normally input, to generate a delivery number and provide the delivery number to the client terminal 700.

Thus, the delivery management server 300 transmits delivery information to the delivery personnel management server 200 when it receives a delivery request from the client terminal 700, and the delivery personnel management server 200 transmits the delivery information and requests delivery person designation intention information to a plurality of registered delivery person terminals 600.

The payment management server 400 is provided to manage payment for delivery, settlement of delivery costs for delivery personnel, and payment and settlement according to B2B, B2P, and P2P. The payment management server 400 is connected to an external financial institution server 500 to settle costs and perform any one of payment and settlement of delivery costs and payment and settlement of freight costs and delivery costs.

That is, the payment will be a delivery cost when only a delivery request is generally received, whereas the payment will be a product purchase cost, namely a sum of a freight cost and a delivery cost, when product purchase and delivery are requested together according to an embodiment of the present invention.

Here, in the payment and settlement of freight costs and delivery costs, a product purchase cost and a delivery cost are settled in the payment management server 400 from the client terminal 700. When the settlement is normally completed, delivery request information is transmitted to the delivery management server 300 such that the information is received through the delivery management server 300. When delivery information is normally input to the delivery management server 300, this information is transmitted to the delivery personnel management server 200 for delivery. When the delivery is normally completed and product purchase confirmation information is received from the client terminal 700, this information is transmitted to the payment management server 400. The payment management server 400 sends the product purchase cost of the costs settled from the client terminal 700 to a relevant product seller.

Of course, when the product purchase confirmation information is not received from the client terminal 700, the payment management server 400 will send a cost except for the delivery cost of the costs settled from the client terminal 700 through designated account information.

As described above, the delivery person terminal 600 accesses the main server 100 for data communication therewith, to perform the delivery person registration process for delivery, transmit delivery person designation intention information at the request of specific delivery to the main server 100, and receive a delivery person designation notification from the main server 100. When the delivery person designation notification is received, the delivery person having a relevant delivery person terminal 600 delivers products according to the relevant delivery information and transmits each of product acquisition information and product transfer information to the delivery management server 300.

Here, the transmission of the product acquisition information is achieved by attaching a delivery label on a product to be delivered when the product is collected after a delivery person terminal 600 arrives at a delivery starting point, and transmitting image information on the product to the delivery management server 300 through the dedicated delivery application. The transmission of the product transfer information is achieved by receiving signature information from a recipient of the delivered product after the delivery person terminal 600 arrives at a delivery destination and transmitting the signature information to the delivery management server 300.

In this case, the delivery management server 300 notifies of delivery completion by transmitting the delivery completion together with the signature information to the client terminal 700.

As described above, in the case where each of the first and second delivery person terminals 610 and 620 are designated for each divided path, when the first delivery person terminal 610 meets with the second delivery person terminal 620, the first delivery person terminal 610 transmits image information on the transferred product to the delivery management server 300 to notify of transfer completion and the second delivery person terminal 620 transmits image information on the acquired product to the delivery management server 300 to notify of reception completion.

In this case, the first and second delivery person terminals 610 and 620 may determine whether or not an acquired product is normal based on the initial product image information and the description information to determine whether acquisition and delivery are normally performed, and also provide a result of the determination to the recipient or the client terminal 700.

As described above, the client terminal 700 accesses the main server 100 for data communication therewith to request the delivery of intended products and receive delivery information on the delivery request from the main server 100.

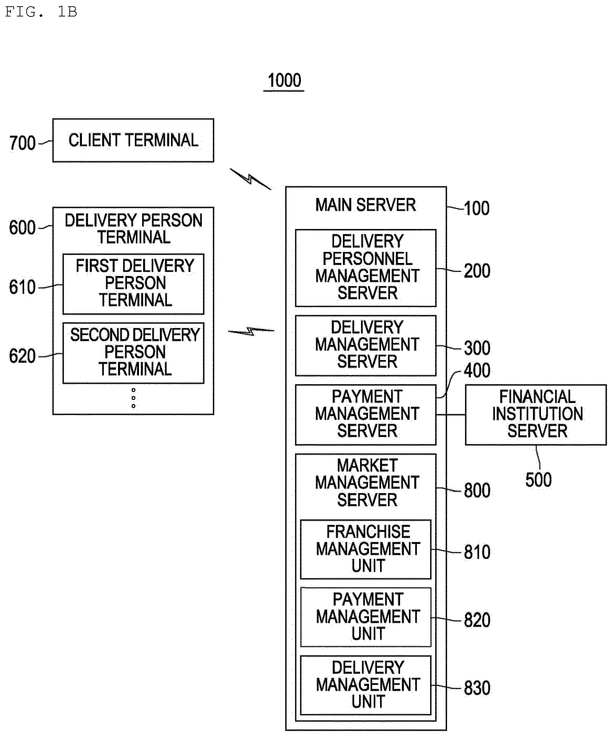

Meanwhile, as illustrated in FIG. 1B, the delivery system 100 according to the present embodiment includes a market management server 800 to provide franchise information to the client terminal 700.

Here, the market management server 800 includes a franchise management unit 810 that lists up franchise information to be provided to the client terminal 700 connected thereto, a payment management unit 820 that manages a payment process for product information of a relevant franchise in connection with the payment management server 400 when a purchase request occurs in the client terminal 700 through the franchise information provided to the client terminal 700 by the franchise management unit 810, and a delivery management unit 830 that allows the product, which has been paid by the payment management unit 820, to be delivered according to the delivery information transmitted from the client terminal 700 in connection with the delivery management server 300 and the delivery personnel management server 200.

Here, when an entry request is received from various franchises, the franchise management unit 810 transmits the entry request to a separate manager terminal (not shown) so that the manager terminal determines whether or not to permit the entry request and transmits entry permission information to the franchise management unit 810.

Thus, when the entry request is accepted by the entry permission information, the franchise management unit 810 provides franchise information on the accepted entry request, wherein the franchise information is included together in the franchise information provided to the client terminal 700. On the other hand, when the entry request is not accepted, the franchise management unit 810 transmits result information to a franchise which requests the entry such that the franchise can check the result information.

The franchise management unit 810 provides franchise information to the client terminal 700 in the form of a web page. The web page may be configured such that a left and right banner space is defined on the page that performs functions such as the delivery request or delivery person registration of the above delivery system 1000 to output the franchise information to the banner space or a separate franchise page is created to provide a plurality of types of franchise information to the client terminal 700. In addition, the franchise management unit 810 enables an advertisement space in the form of a banner to be permanently rented through bids.

Meanwhile, examples of the franchise may include street restaurants, service area restaurants, handmade grocery stores, overseas direct purchase agency markets, and the like.

In the case where street restaurants are opened, the street restaurants on the main street such as Myeong-dong or Noryangin are permitted to join as a franchise so that street food such as fish-shaped buns, cup rice, and chicken skewers is instantly paid by the payment management unit 820 at the request of the client terminal 700 and immediately delivered by the delivery management unit 830.

In the case of service area restaurants, in order to solve a problem that is lots of time and money constraints to eat service area food, the service area restaurants are permitted to join as a franchise so that service area food, which has increased rapidly in popularity on the broadcast in recent years, may be delivered to a client through the delivery system of the present invention using tour bus drivers, truck drivers, or the like, who often visit service areas, as delivery persons.

In the case of handmade grocery stores that mainly sell food through blogs, the same delivery service as an existing delivery application may be provided to eat side dishes on that evening by placing an order on the same day. In the case of overseas direct purchase agency markets, overseas direct purchases may be easily and simply delivered in such a manner that people who come back from abroad are registered as delivery persons to deliver products booked in advance.

On the other hand, a method of purchasing products from abroad and then registering the products in the market management server 800 for sale may be adopted. It is possible to easily purchase foreign famous chocolate, special edition products sold only in the specific city, and the like.

For example, if people want to purchase a Starbucks tumbler sold in Paris, France, it is possible to use a method of uploading request information to the market management server 800 to make a request to people who return from a business trip to Paris.

Meanwhile, when there is a purchase request according to franchise information, the payment management unit 820 transmits information on payment and settlement of costs and delivery costs of a relevant purchase product to the payment management server 400. When payment confirmation information is received from the payment management server 400, the delivery management unit 830 transmits delivery information on that product, received from the client terminal 700, to the delivery management server 300. When this information is normally input to the delivery management server 300, the delivery management server 300 transmits the delivery information to the delivery personnel management server 200 for delivery. When the delivery is normally completed and product purchase confirmation information is received from the client terminal 700, this information is transmitted to the payment management server 400. The payment management server 400 sends the product purchase cost of the costs settled from the client terminal 700 to a relevant product seller.

First, the process of registering delivery persons according to the present invention will be described below.

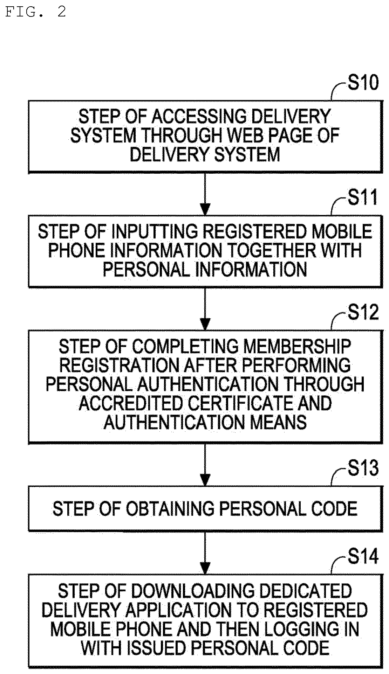

Referring to FIG. 2, a general person who wants to be registered as a delivery person first accesses the delivery system through an Internet web page provided from the main server 100 (S10). Then, the person inputs personal information, for example individual human information such as an address, and information such as movable regions, whether or not having vehicles, a mobile number to be registered, and a deposit account (S11). Then, the person completes membership registration after performing personal authentication through an accredited certificate and an authentication means (S12), and obtains a personal code (S13). Then, the person downloads a dedicated delivery application to a registered mobile phone and then logs in with the issued personal code (S14). For the sake of accuracy, mobile phone authentication is performed through the registered mobile phone when the application is downloaded. Through these steps, the process of registering delivery persons is completed.

Next, the process of sending products will be described below.

A person who wants to deliver a product to a specific region first accesses the delivery system of the present invention through a computer or a mobile phone Internet and then requests delivery (S20). In this case, the person who requests delivery may request delivery regardless of whether or not to join the delivery system as membership. When the delivery is requested, information on a sender and a recipient, information on a product to be sent, and information on the price of the product to be sent are input. In this case, when a sender address differs from a delivery request address, the delivery request address is put. Then, a delivery number is provided from the delivery system to a delivery requester (S21).

Then, special delivery persons are notified through the dedicated delivery applications that there is a product to be delivered (S22). In this case, for the sake of rapid delivery, only a special delivery person who is within a certain distance is notified using GPS information of the mobile phone of the special delivery person or base station information when the GPS information is not checked, and geographical information of a sender address or a sending request address. For example, special delivery persons who are within 1 km are notified in the case of the delivery persons walking with no vehicle, and special delivery persons who are within 3 km are notified in the case of the delivery persons using any vehicle.

Then, the delivery intentions of special delivery persons who meet the condition are checked in order of arrival through the applications (S23). Then, a delivery person in charge is designated from the delivery system (S24), and the designated delivery person in charge collects a product to be delivered at a delivery request address (S25). In this case, a delivery requester may pack the product in advance for delivery or the special delivery person may pack the product on the site.

Then, the special delivery person attaches a delivery label on the packed product after putting a delivery number together with sender and recipient information on the delivery label of the product, receives the confirmation of the delivery requester, and then photographs this state to upload it to the application (S26). The reason why the product to be delivered is photographed and uploaded is to be used as evidence about damage that may arise in the future.

Then, the special delivery person delivers the product to a recipient at a destination, namely a recipient address, and then gets a recipient's signature through the application of the mobile phone of the special delivery person (S27). Then, product delivery completion is transmitted to the delivery system and the sender or the delivery requester is notified that the product is normally delivered. In this way, the delivery requester may check the delivery state of the product through the web page of the delivery system. However, unlike the checking method in an existing delivery system, namely the method of checking only a region in which a product is located, it is possible to check the delivery state of the product in real time. That is, since the application used by the special delivery person continues to provide GSP information, it is possible to check a specific place in which the product is located through the application in real time.

The above-mentioned process of delivering products is a delivery process at a short distance, for example, in a region such as Seoul, Suwon, Daegu, or Busan. However, long-distance product delivery, for example, the product delivery from Seoul to Daegu on the same day, is substantially impossible. It takes two days in a typical delivery system.

However, the delivery system according to the present invention enables products to be delivered on the same day since general persons are used as special delivery persons instead of the special delivery persons employed in the courier service.

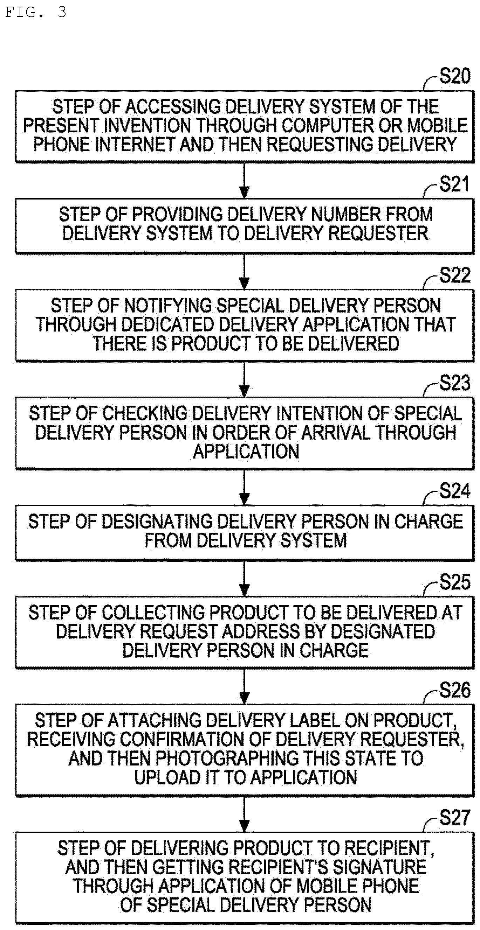

The long-distance delivery will be described below with reference to FIG. 3. For convenience of description, an example in which products are delivered from Nowon-gu, Seoul to Seo-gu, Daegu is described.

First, a person who wants to deliver a product accesses the delivery system of the present invention through a computer or a mobile phone Internet and then requests delivery (S30). As described above, information on a sender and a recipient, information on a product to be sent, and information on the price of the product to be sent are input. In this case, when a sender address differs from a delivery request address, the delivery request address is put. Then, a delivery number is provided from the delivery system to a delivery requester (S31).

Then, special delivery persons are notified through the dedicated delivery applications that a product to be delivered is in Seo-gu, Daegu (S32). In this case, for the sake of rapid delivery, only a special delivery person who is within a certain distance is notified using GPS information of the mobile phone of the special delivery person or base station information when the GPS information is not checked, and geographical information of a sender address or a sending request address. If no special delivery person is within the certain distance, the process is performed to look for a special delivery person in a wider region.

Then, the delivery intentions of special delivery persons who meet the condition are checked in order of arrival through the applications (S33). If any special delivery person who meets the condition may directly deliver the product to Seo-gu, Daegu, the process proceeds to steps (S24 to S27) described above. That is, when a person moves from Daegu to Nowon-gu, Seoul on a business trip or on a personal matter and then return to Daegu, the person may receive a product in Nowon-gu, Seoul and then deliver the product to a recipient in Seo-gu, Daegu.

However, if one special delivery person may not deliver a product from Nowon-gu, Seoul to Seo-gu, Daegu, it is possible to deliver the product by interconnection of a plurality of special delivery persons.

First, special delivery persons are notified through first delivery person terminals 610 of a request to look for registered first special delivery persons who can perform delivery from a specific region, Seoul to Seo-gu, Daegu (S33).

Then, the delivery intention of a first special delivery person who can perform delivery from a specific region, Seoul to Seo-gu, Daegu is checked (S34).

Then, special delivery persons are notified through second delivery person terminals 620 of a request to look for second special delivery persons who can perform delivery to a specific region in which the first special delivery persons are, for example, an express bus terminal or a train station (S35).

Then, the delivery intention of a second special delivery person who can perform delivery to a specific region, Seoul is checked (S35), and the second special delivery person visits a delivery request address and collects a product to be delivered after photographing the product and uploading it (S36).

Then, after the first special delivery person meets with the second special delivery person in the specific region, the product is transferred between the first and second special delivery persons (S37). In this case, after checking whether or not the transferred product is normal through the uploaded product photograph, the acquisition/transfer completion of the product between the first and second special delivery persons is checked through the application (S38).

Then, after the first special delivery person transfers the product to a recipient in Seo-gu, Daegu and gets a recipient's signature, the delivery is completed (S39).

As such, the product can be delivered to a long distance on the same day using a plurality of special delivery persons. Although an example of the special delivery person using the express bus terminal or the train station has been described above, special delivery persons using any aircraft may be used in the region in which aircrafts are launched. In addition, drivers who directly drive any vehicle, for example, passenger car drivers or truck drivers who come back from Seoul after product delivery may be used as special delivery persons.

Although an example in which two special delivery persons are used has been described above, three special delivery persons may be used such as a special delivery person for delivery to a specific region, Seoul, a special delivery person for delivery from a specific region, Seoul to a specific region, Daegu, and a special delivery person for delivery to a specific region, Daegu.

Meanwhile, a business transaction between individuals, for example, a used product transaction has been active in recent years. This used product transaction is performed through direct dealing or delivery service. However, this transaction is also performed through a so-called secure payment means because there is no trust between parties due to the characteristics of the used product transaction. However, in the case where the secure payment is used, payment and delivery are separately performed, the costs through secure payment is deposited after a considerable period, for example, 3-4 days even since the product has been delivered, and service costs are expensive. Hence, people selling products have tended to avoid the secure payment.

However, in the delivery system of the present invention, it is possible to simultaneously perform payment and delivery, perform delivery on the same day, and rapidly pay a cost.

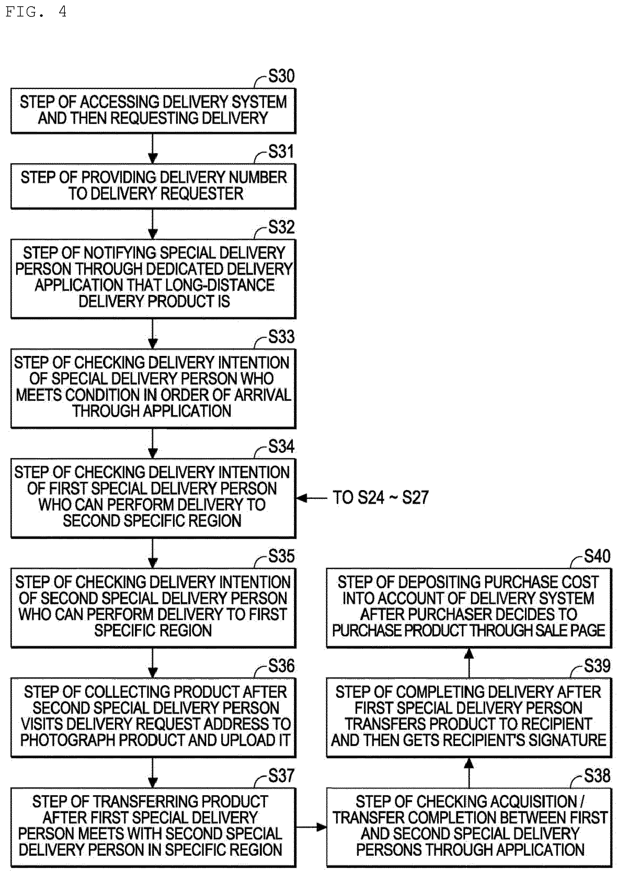

The secure payment and the delivery system will be described below with reference to FIG. 4.

First, a purchaser decides to purchase a product through a sale page and deposits a purchase cost into the account of the delivery system (S40).

Then, special delivery persons are notified through the applications that there is a product to be delivered (S41). When a special delivery person for delivery is designated, the special delivery person collects the product from a seller (S41). In this case, the seller does not pack the product in advance, but the special delivery person packs the product. The special delivery person determines whether or not the product to be collected is normal based on information, namely photograph information and description, displayed on the sale page. When the product is determined to be normal, the special delivery person photographs or photographs the packed state of the product after packing the product, and then uploads the photographs.

Then, after the special delivery person directly delivers the packed product to the purchaser, the special delivery person allows the purchaser to directly check whether or not the product is normal in the site and then determines it. When the product is normal, the special delivery person receives purchase confirmation from the purchaser through the application (S42).

Then, the delivery system allows the purchase cost except for a fee to be deposited into a seller's account on the same day or the next day (S43).

If the product is returned without purchase confirmation from the purchaser, a cost obtained by subtracting a delivery cost and a return cost from the deposit cost of the purchaser is deposited into the return account of the purchaser after the return is completed.

As described above, it is unnecessary for a relevant person to directly deliver a product through delivery service since the product is purchased and simultaneously delivered through the sale site, it is possible to prevent fake trade since it is determined whether or not the product is normal by the special delivery person, and it is possible to provide a cost of the product to the seller within a short time.

Meanwhile, in the case of current food delivery service, a variety of restaurants are guided on the web page of a food delivery service company, in which case when a customer selects a restaurant and food through the web page, the special delivery person of the food delivery service company visits the restaurant to collect the selected food and deliver it to the customer. In this case, it is disadvantageous in that the special delivery person has little money since the special delivery person takes a profit from the predetermined delivery charge paid from the restaurant instead of taking a service cost through the web page from the restaurant.

Thus, in the present invention, a food delivery web page is created and imaginary restaurants are made on the web page to give them to a desired restaurant. When a customer selects an imaginary restaurant, the imaginary restaurant is connected to the actual web page or blog of the restaurant, and the customer orders food from the actual web page or blog. Then, the ordered food is delivered by the special delivery person registered in the system in the above-mentioned manner.

The delivery method according to the present invention is effective in that the same-day delivery service can be offered regardless of distance by utilizing a general person as a special delivery person and the profit of the delivery person can be maximized by providing the delivery person with most of delivery costs.

In addition, the delivery method has an effect of preventing fake trade by delivery person's product inspection and of rapidly settling payment.

The present invention may be embodied in different forms and should not be construed as limited to the embodiments set forth herein. For clear explanation of the present invention, parts irrelevant to the description may be omitted in the drawings. While the present invention has been described with respect to the specific embodiments, it will be apparent to those skilled in the art that various changes and modifications may be made without departing from the spirit and scope of the invention as defined in the following claims.

## Claims

1. A delivery method using a delivery system, which comprises a main server (100) for managing the entirety of the delivery system, a delivery personnel management server (200) for managing delivery personnel, a delivery management server (300) for managing delivery of a product at a customer's request, and a payment management server (400) for managing payment for delivery, settlement of delivery costs for delivery personnel, and payment and settlement according to B2B, B2P, and P2P, the delivery method comprising:
registering a special delivery person and delivering a product,
wherein the registering a special delivery person comprises:
accessing the delivery system through a delivery system web page (S10);
inputting registered mobile phone information together with personal information (S11);
completing membership registration after performing personal authentication through an accredited certificate and an authentication means (S12);
obtaining a personal code (S13); and
downloading a dedicated delivery application to a registered mobile phone and then logging in with the issued personal code (S14), and
wherein the delivering a product comprises:
accessing the delivery system through a computer or a mobile phone Internet and then requesting delivery (S20);
providing a delivery number from the delivery system to a delivery requester (S21);
notifying special delivery persons through their dedicated delivery applications that there is a product to be delivered (S22);
checking delivery intentions of the special delivery persons in order of arrival through their applications (S23);
designating a delivery person in charge from the delivery system (S24);
collecting the product to be delivered at a delivery request address by the designated delivery person in charge (S25); and
getting a signature of a recipient through the application of the mobile phone of the special delivery person after the product is delivered to the recipient (S27).

2. The delivery method according to claim 1, further comprising, after the collecting the product to be delivered (S25), attaching a delivery label on the packed product after the special delivery person puts a delivery number together with sender and recipient information on the delivery label, receiving confirmation of a delivery requester, and then photographing this state to upload it to the application (S26).

3. The delivery method according to claim 1, further comprising performing mobile phone authentication through the registered mobile phone in the downloading a dedicated delivery application (S14).

4. The delivery method according to claim 1, wherein in the notifying special delivery persons (S22), only a special delivery person who is within a certain distance is notified using GPS information of the mobile phone of the special delivery person or base station information, and geographical information of a sending request address.

5. The delivery method according to claim 1, wherein in the delivering a product, the product is delivered on the same day.

6. The delivery method according to claim 1, wherein a delivery state is able to be checked in real time, based on GPS information of the mobile phone of the special delivery person or base station information.

7. A delivery method using a delivery system, which comprises a main server (100) for managing the entirety of the delivery system, a delivery personnel management server (200) for managing delivery personnel, a delivery management server (300) for managing delivery of a product at a customer's request, and a payment management server (400) for managing payment for delivery, settlement of delivery costs for delivery personnel, and payment and settlement according to B2B, B2P, and P2P, the delivery method comprising:
registering a special delivery person and delivering a product,
wherein the registering a special delivery person comprises:
accessing the delivery system through a delivery system web page (S10);
inputting registered mobile phone information together with personal information (S11);
completing membership registration after performing personal authentication through an accredited certificate and an authentication means (S12);
obtaining a personal code (S13); and
downloading a dedicated delivery application to a registered mobile phone and then logging in with the issued personal code (S14), and
wherein the delivering a product comprises:
accessing the delivery system and then requesting delivery (S30);
providing a delivery number to a delivery requester (S31);
notifying special delivery persons through their dedicated delivery applications that a long-distance delivery product is (S32);
checking delivery intentions of special delivery persons who meet a condition in order of arrival through their applications (S33);
collecting the product at a delivery request address and delivering the product to a recipient by a relevant special delivery person who meets the condition;
if there is no special delivery person in the notifying special delivery persons (S32), notifying the special delivery persons through their applications of a request to look for registered first special delivery persons who can perform delivery from a first specific region to a second specific region;
checking delivery intentions of the first special delivery persons who can perform delivery to the second specific region (S34);
notifying the special delivery persons of a request to look for second special delivery persons who can perform delivery to the first specific region;
checking delivery intentions of the second special delivery persons who can perform delivery to first second specific region (S35), and collecting a product to be delivered after a relevant second special delivery person visits a delivery request address and photographs the product to upload it (S36);
transferring the product after the first special delivery person meets with the second special delivery person in a specific region (S37);
checking acquisition/transfer completion between the first and second special delivery persons through their applications (S38); and
completing the delivery after the first special delivery person transfers the product to a recipient in the second specific region and gets a signature of recipient (S39).

8. The delivery method according to claim 7, wherein in the transferring the product (S37), the first and second special delivery persons compare the product on the uploaded photograph in the collecting a product (S36) with the transferred product for verification.

9. The delivery method according to claim 7, wherein a delivery state is able to be checked in real time, based on GPS information of the mobile phones of the first and second special delivery persons.

10. The delivery method according to claim 7, wherein the first specific region comprises an express bus terminal, a train station, and an air terminal.

11. The delivery method according to claim 7, wherein in the delivering a product, the product is delivered on the same day.

12. A delivery method using a delivery system, which comprises a main server (100) for managing the entirety of the delivery system, a delivery personnel management server (200) for managing delivery personnel, a delivery management server (300) for managing delivery of a product at a customer's request, and a payment management server (400) for managing payment for delivery, settlement of delivery costs for delivery personnel, and payment and settlement according to B2B, B2P, and P2P, the delivery method comprising:
depositing a purchase cost into an account of the delivery system after a purchaser decides to purchase a product through a sale page (S40);
notifying special delivery persons through their applications that there is a product to be delivered (S41):
when a special delivery person for delivery is designated, collecting the product from a seller by the special delivery person (S42); and
allowing the purchaser to directly check whether or not the packed product is normal in the site to determine it after the special delivery person directly delivers the product to the purchaser, and receiving purchase confirmation from the purchaser through the application thereof when the product is normal (S43).

13. The delivery method according to claim 12, wherein in the collecting the product (S42), the special delivery person directly packs the product.

14. The delivery method according to claim 13, wherein when the special delivery person directly packs the product, the special delivery person determines whether or not the product to be collected is normal, based on information, as photograph information and description, displayed on the sale page, photographs the product when the product is normal or photographs a packed state of the product after packing the product, and then uploads photographs.
